Europäisches Patentamt

European Patent Office

Office européen des brevets

(11) Veröffentlichungsnummer: **0 572 749 A1**

# EUROPÄISCHE PATENTANMELDUNG

(21) Anmeldenummer: **92810428.0**

(22) Anmeldetag: **04.06.92**

(51) Int. Cl.5: **G06F 15/401**, G06F 15/413, G06F 15/411

(43) Veröffentlichungstag der Anmeldung:
**08.12.93 Patentblatt 93/49**

(84) Benannte Vertragsstaaten:
**AT BE CH DE DK ES FR GB GR IT LI LU MC NL PT SE**

(71) Anmelder: **Aeschlimann, Klaus-Jürg
Liestalerstrasse 42
CH-4411 Seltisberg(CH)**

(72) Erfinder: **Aeschlimann, Klaus-Jürg
Liestalerstrasse 42
CH-4411 Seltisberg(CH)**

(74) Vertreter: **Fischer, Franz Josef et al
BOVARD AG
Patentanwälte VSP
Optingenstrasse 16
CH-3000 Bern 25 (CH)**

(54) **Datenbank in einer EDV-Anlage.**

(57) Eine Datenbank in einer EDV-Anlage umfasst mindestens zwei Dateien mit je mehreren Datensätzen. In den Datensätzen der ersten Datei sind in mehreren Datenfeldern objektspezifische Daten gespeichert und in einem Datenfeld ein Verknüpfungsbegriff. In den Datensätzen der zweiten Datenbank sind in einem ersten Datenfeld Klassifizierungs- oder Suchbegriffe gespeichert und in einem zweiten Datenfeld eine Zuordnungskennzeichnung. In jedem Verknüpfungsbegriff der ersten Datei sind Angaben über sämtliche Such- und Klassifizierungsinformationen enthalten, die auf die Merkmale der im entsprechenden Datensatz gespeicherten objektbezogenen Daten zutreffen. Durch einen hierarchisch geordneten, baumstrukturförmigen Aufbau der zweiten Datei, durch die besondere Gestaltung der Zuordnungskennzeichnungen in jedem Datensatz und durch die bei jedem Klassifizierungs- oder Suchvorgang anhand eines Algorhythmus errechenbare Relation zum Verknüpfungsbegriff, welcher in einem einzigen Datenfeld auch möglichst kurz gehalten ist, ist eine schnelle Klassierung von neu erfassten Objekten und eine schnelle Suche von Datensätzen in der Datenbank nach irgendeiner Suchbegriffkombination möglich.

EP 0 572 749 A1

## FIG. 4

| 32 | 27 | 31 |
|------|------|------|
| 0000 | | |
| 1000 | Motorräder | |
| 2000 | PW A – N | |
| 3000 | PW M – Z | |
| 4000 | LKW | |
| 5000 | | |
| 6000 | | |
| 7000 | | |
| 8000 | | |
| 9000 | Preisklasse | |
| A000 | Farbe | |
| B000 | Ausrüstung | |
| C000 | Motor | |
| D000 | Chassis | |
| E000 | | |
| F000 | | |

20      19

Block aus
Hierarchieebene 1

| 32 | 31 | 28 |
|------|------|------|
| 2000 | | |
| 2100 | Audi | |
| 2200 | | |
| 2300 | BMW | |
| 2400 | Citroen | |
| 2500 | | |
| 2600 | | |
| 2700 | | |
| 2800 | | |
| 2900 | | |
| 2A00 | | |
| 2B00 | | |
| 2C00 | | |
| 2D00 | | |
| 2E00 | | |
| 2F00 | Honda | |

Block aus
Hierarchieebene 2

| 29 | |
|------|------|
| 2300 | |
| 2310 | |
| 2320 | 3er Reihe |
| 2330 | |
| 2340 | 5er Reihe |
| 2350 | |
| 2360 | 7er Reihe |
| 2370 | 8er Reihe |
| 2380 | |
| 2390 | |
| 23A0 | |
| 23B0 | |
| 23C0 | |
| 23D0 | |
| 23E0 | |
| 23F0 | |

20      19

Block aus
Hierarchieebene 3

| 30 | |
|------|------|
| 2320 | |
| 2321 | |
| 2322 | 316 er |
| 2323 | |
| 2324 | 318 er |
| 2325 | |
| 2326 | 320er |
| 2327 | |
| 2328 | 325er |
| 2329 | |
| 232A | |
| 232B | |
| 232C | |
| 232D | |
| 232E | |
| 232F | |

20

Block aus
Hierarchieebene 4

19

| A800 | rot |
|------|------|

28"

| 9400 | Fr.10000-12000 |
|------|------|

28'

2

Die vorliegende Erfindung bezieht sich auf eine Datenbank in einer EDV-Anlage gemäss dem Oberbegriff des Patentanspruches 1 sowie auf je ein Verfahren zum Erfassen bzw. zum Auffinden von Objekten in einer Datenbank.

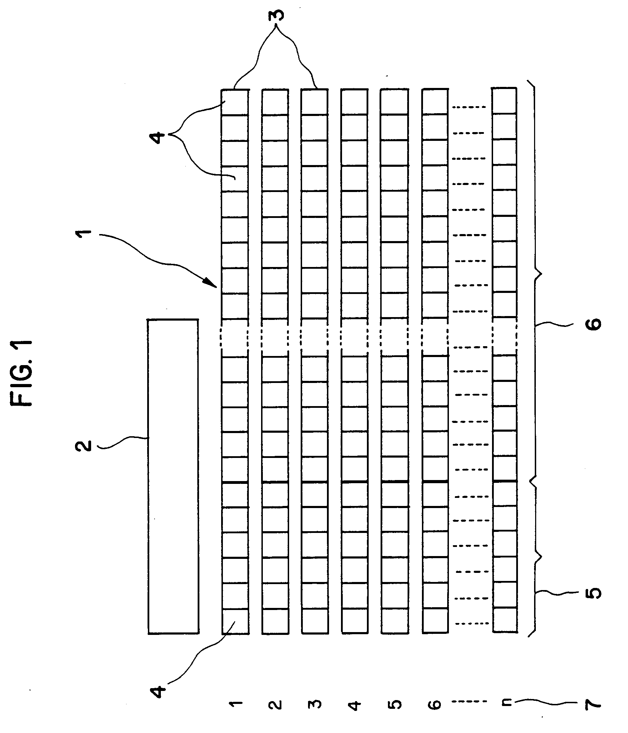

Datenbanken sind praktisch seit dem Bestehen von EDV-Anlagen bekannt. Eine Datenbank besteht aus einer oder mehreren aufeinander bezogenen Dateien und dient zur strukturierten Ablage von Informationen. Die Dateien der Datenbank sind auf einem nichtflüchtigen Speichermittel, wie einer Festplatte oder einem Magnetband, der EDV-Anlage gespeichert. Die Dateien der Datenbank können je nach der Menge der Informationen, die darin bereits enthalten sind, neu hinzuzufügen oder zu löschen sind, in ihrer Grösse variiert werden. In den meisten Fällen kann jede Datei einer Datenbank als je ein strukturiertes Gebilde mit mehreren gleichartig aufgebauten Datensätzen aufgefasst werden. Eine solche Datei 1 ist beispielsweise in der Fig. 1 gezeigt. Jede Zeile dieser Figur entspricht einem Datensatz 3, der seinerseits in mehrere einzelne Datenfelder 4 unterteilt ist. Gleichartige Datenfelder sind spaltenweise übereinander angeordnet gezeichnet. In jedem der Datensätze sind alle gewünschten Informationen, die zum Kennzeichnen je eines erfassten Objektes erforderlich sind, enthalten. Diesen Informationen können, auf das erfasste Objekt bezogen, verschiedene Klassen 5, 6 zugeordnet werden. Eine erste Klasse 5 sind Informationen mit einmaligem Charakter, d.h., alle Informationen dieser Klasse sind für jedes der erfassten Objekte verschieden. Informationen dieser Klasse müssen vollständig in die dafür vorgesehenen Felder des Datensatzes eingetragen werden. Sind in der Datenbank beispielsweise Motorfahrzeuge erfasst, so sind Informationen der genannten Klasse beispielsweise die Motornummer, die Chassisnummer usw..

Eine weitere Klasse 6 von Informationen sind solche mit wiederkehrendem Charakter. Jedes in der Datei erfasste Objekt kann Merkmale enthalten, die bei mehreren anderen erfassten Objekten ebenfalls vorhanden sind. Im obgenannten Beispiel der Motorfahrzeuge wären Informationen dieser weiteren Klasse, beispielsweise der Hersteller oder die Fahrzeugmarke, die Farbe, usw.. Informationen dieser weiteren Klasse können, wie die Informationen der ersten Klasse, vollständig in dafür vorgesehenen Datenfeldern vorhanden sein. Eine andere Möglichkeit, Informationen dieser weiteren Klasse zu erfassen, ist die, dass für jede zu erfassende Informationsvariante ein Datenfeld bereitgestellt wird, wobei im Datenfeld beim Zutreffen der diesem zugeordneten Informationsvariante auf das entsprechende Objekt, lediglich eine Markierung (Flag) zu setzen ist. Im vorgenannten Beispiel würde dies bedeuten, dass für jede mögliche Fahrzeugmarke ein Datenfeld vorhanden wäre, beispielsweise eines für BMW, eines für Audi, eines für VW, usw. sowie je eines für die Farben rot, blau, weiss, usw.. Während in der erstgenannten Möglichkeit ein Datenfeld viele verschiedene Informationen enthalten kann, der Feldinhalt offen ist und relativ wenige Datenfelder nötig sind, ist zu beachten, dass jedes der Felder so lang ist, wie die längste darin zu erfassende Information. Es sind relativ komplizierte Subroutinen zum Auffinden der Daten notwendig. In der zweitgenannten Möglichkeit enthält jedes der Datenfelder meistens nur eine Ja/Nein-Information. Dafür sind viele Datenfelder nötig, die alle gleich lang und sehr kurz sind. Die Feldinhalte sind vorgegeben. Die Suche nach Objekten kann mit einer einfachen Prüfung auf Ja/Nein erfolgen.

Welche Möglichkeit zur Speicherung der Informationen der weiteren Klasse angewandt wird, muss von Fall zu Fall abgewogen werden. Die Faktoren, die den Entscheid beeinflussen, sind mannigfaltiger Art:
- verlangte Funktionalität (z.B. Suchroutinen)
- Komplexität der Anwendung
- Anzahl, Grösse und Häufigkeit der Informationsvarianten
- Beziehungen zwischen den abgelegten Informationen
- Mutationshäufigkeit
- Be- und Verarbeitungsmöglichkeiten (bestehende Routinen)
- Zugriffsmöglichkeit (bestehende Routinen)
- Anforderung an die Geschwindigkeit des Zugriffs
- Uebersichtlichkeit (Wartung)
- eingesetzte Hardware
- Betriebssoftware
- Programmiersprache
- zur Verfügung stehender Platz auf dem Speichermittel
- Sicherheit
- Entwicklungskosten
- Betriebskosten

In der Praxis werden die beiden Methoden nicht strikt getrennt, sondern je nach Sachverhalt, gemischt eingesetzt. Die weiter oben beschriebenen Unterschiede sind auch nicht positiv oder negativ zu werten, sondern können erst in Verbindung mit einer konkreten Anwendung beurteilt werden.

Die Speicherung der Datensätze 3, von denen jeder eine Datensatznummer 7 hat, einer Datei 1 auf dem Speichermittel erfolgt wie Perlen, die an einer Schnur aneinandergereiht werden. In der Datei gehen den Datensätzen Informationen voraus, die über die Struktur der Datei Auskunft geben, wie Anzahl Datensätze, Länge eines Datensatzes, Bezeichnung der Felder mit Name, Länge, Inhaltsart (alphanumerisch, numerisch, logisch, etc.) usw.. All diese Informationen sind im sogenannten Dateiheader 2 enthalten. Er ist umso grösser, als Anzahl Datenfelder bereitgestellt werden müssen.

Bei der hier beschriebenen Struktur von Dateien für Datenbanken muss Platz reserviert werden für mögliche Informationen, so dass für die Bereitstellung leerer Felder relativ viel Speicherplatz verbraucht wird. Es bestehen Verfahren, leere oder nur zum Teil gefüllte Datenfelder zu komprimieren. Die Komprimierung ist mit ins Gewicht fallenden Nachteilen verbunden:

- die einzelnen Datensätze auf dem Speichermittel weisen physisch nicht mehr die gleiche Länge auf, so dass zur Abtrennung Markierungen verwendet werden müssen,
- um die Datensätze wieder in den lesbaren Zustand zurückzuversetzen, müssen sie zurückverwandelt werden,
- die Komprimierung und Dekomprimierung verlangt programmtechnischen Aufwand und ist zeitaufwendig.

Das soeben genannte Vorgehen wird in der Praxis vor allem bei Standardsoftware, wie Lotus, Framework, Symphony eingesetzt.

Der Aufbau einer Datenbank wird durch die für den Anwender wichtigsten Kriterien für das gute Funktionieren der Datenbank, die Suchroutinen, stark bestimmt. Es hat sich gezeigt, dass in der Praxis oft mehr Zeit aufgewendet wird, für eine technisch brilliante Lösung zum Erfassen von Daten als für deren Auswertung. Die Probleme bei grossen Datenbanken liegen heute nicht mehr im technischen Bereich (Speicherkapazität oder Verarbeitungsgeschwindigkeit) sondern in der mangelnden Bereitstellung von geeigneten Lösungen, um an die gewünschten Daten innert kürzester Frist heranzukommen.

Die meisten Programmiersprachen oder Standardprogramme stellen fertige optimierte Suchroutinen zur Verfügung.

Bei der sequentiellen Suche, auf die wegen ihrer Langsamkeit hier nicht länger eingegangen werden soll, werden im wesentlichen die Informationen eines Datensatzes nach dem anderen in den Arbeitsspeicher der EDV-Anlage geladen. Dort werden die einzelnen Feldinhalte mit Suchbegriffen, nach denen die Datei der Datenbank abzusuchen ist, verglichen.

Bei Datenbankaufbauten mit Dateien der vorbeschriebenen Struktur hat sich eigentlich die Suche mit Indexen durchgesetzt. Auf eines oder mehrere Felder der Datei wird ein Index aufgebaut. Es handelt sich dabei um eine neue Datei, eine sogenannte Indexdatei, in welcher gleich viele Datensätze wie in der Mutterdatei vorhanden sind. Jeder Datensatz weist mehrere, oftmals nur zwei Datenfelder auf. In einem davon ist der Feldinhalt der Mutterdatei, nach dem gesucht werden soll, gespeichert. In einem zweiten ist die physische Datensatznummer der Mutterdatei enthalten. Mit einer speziellen Suchsoftware wird die Reihenfolge der Datensätze in der Indexdatei solange verändert, bis sie physisch dem Sortierungsauftrag entspricht (z.B. alphabetisch, auf- oder absteigend). Die Datensätze in der Mutterdatei werden nicht verändert. Die Lesevorgänge in der Mutterdatei werden durch die sortierte Indexdatei gesteuert, indem darin die Datensatznummern der Mutterdatei in der richtigen Lesereihenfolge enthalten sind. Beim Suchvorgang ist es deshalb nicht notwendig, dass jeder Datensatz der Mutterdatei nacheinander gelesen wird. Das Feld mit der physischen Datensatznummer in der Indexdatei des dort aktivierten Datensatzes zeigt auf den effektiven Datensatz in der Mutterdatei. Bewegt man sich in der Datenbank vor oder zurück, wird in der Indexdatei zuerst die physische Datensatznummer der Mutterdatei ermittelt und erst dann der Inhalt des Datensatzes in der Mutterdatei mit der entsprechenden Datensatznummer gelesen.

Eine effiziente schnelle Suche ist mit vorbereiteten Indexdateien möglich. Die Suchbegriffe sind darin jedoch fest vorgegeben. Die Indexdateien müssen mit jeder Aenderung in der Mutterdatei nachgeführt werden. Dazu müssen Sie bei Aenderungen immer geöffnet sein oder nach den Aenderungen neu aufgebaut werden. Ein Neuaufbau einer Indexdatei ist relativ zeitaufwendig.

Mehrere Indexdateien können nicht miteinander verknüpft werden. Pro Suchvorgang in der Mutterdatei kann immer nur eine Indexdatei führend sein.

Die Anzahl der Indexdateien ist meistens zahlenmässig beschränkt. Es ist zu beachten, dass auch in den Fällen, wo die Limitierung keine praktische Bedeutung mehr hat, eine Vielzahl von offenen Indexdateien den Arbeitsspeicher belastet und die Effizienz des Suchprogrammes beeinflusst.

Theoretisch ist es denkbar, dem Benutzer selbst den Aufbau von Indexdateien zu ermöglichen. Das setzt aber weitergehende Kenntnisse in der Datenverarbeitung voraus.

Ein Suchvorgang erfolgt zweistufig. Zuerst wird in der Indexdatei derjenige Datensatz markiert, auf den der Suchbegriff zutrifft. Die diesem markierten Datensatz zugeordnete physische Datensatznummer gibt

4

einen Hinweis auf den entsprechenden Datensatz in der Mutterdatei. Die in der Indexdatei dem markierten Datensatz folgenden Datensätze müssen einzeln auf die Uebereinstimmung mit dem Suchbegriff geprüft werden.

Insbesondere bei Suchvorgängen mit immer anderen Suchbegriffen, die bei der Erstellung der Suchroutinen nicht voraussehbar sind, ist in Dateien der beschriebenen Art, wegen dem vorgängigen Aufbau von Indexdateien, ein Suchvorgang für den Anwender relativ kompliziert und zeitaufwendig.

Es ist die Aufgabe der vorliegenden Erfindung, eine Datenbank zu schaffen, die derart optimiert ist, dass eine Suche nach allen möglichen Suchbegriffkombinationen von jedem Anwender durchführbar ist, wobei ein Suchvorgang wesentlich schneller abläuft als bei den heute üblicherweise verwendeten Datenbanken.

Diese Aufgabe wird mit einer Datenbank gelöst, die die im kennzeichnenden Teil des Patentanspruches 1 aufgeführten Merkmale aufweist. Je ein Verfahren zum Erfassen bzw. zum Auffinden von Objekten in der erfindungsgemässen Datenbank ist im kennzeichnenden Teil des Patentanspruches 9 bzw. des Patentanspruches 10 aufgeführt.

In der erfindungsgemässen Datenbank, in der in einer ersten Datei die objektbezogenen Daten enthalten sind und in der in einer zweiten Datei alle Begriffe zum Klassifizieren und zum Suchen dieser Daten enthalten sind, wird durch das hierarchische Anordnen der Klassifizierungs- und Suchbegriffe und durch das konsequente Zuordnen einer Kennzeichnung zu jedem der Klassifizierungs- und Suchbegriffe in der zweiten Datei sowie durch das Erstellen eines Verknüpfungsbegriffes zu jedem Datensatz bzw. erfassten Objekt in der ersten Datei, in welchem Verknüpfungsbegriff Informationen über alle Klassifizierungs- und Suchbegriffe, auf die das Objekt ansprechen soll, enthalten sind, kann eine äusserst schnelle und einfache Klassifizierung von neuen Objekten sowie eine äusserst schnelle und einfache Suche nach vorhandenen Objekten durchgeführt werden. Der Platzbedarf der Datenbank ist verglichen mit zum Stand der Technik gehörenden Datenbanken wesentlich kleiner.

Um die rechnerinternen Klassifizierungs- und Suchvorgänge kurz zu halten, ist es von Vorteil, wenn die Zuordnungskennzeichnung ein möglichst kurz gehaltener Ausdruck gemäss dem Patentanspruch 2 ist. Wenn die zweite Datei gemäss den in den Patentansprüchen 3 bis 6 vorgeschlagenen Merkmalen aufgebaut ist, kann eine besonders anwenderfreundliche Klassifizierung von neuen Objekten bzw. Suche von erfassten Objekten in einem Top-Down-Verfahren durchgeführt werden, wie dies beispielsweise durch die Verfahrensansprüche 9 und 10 vorgeschlagen wird.

Eine wesentliche Rolle in bezug auf die benötigte Zeit zum Suchen nach Objekten in der Datenbank kommt dem Aufbau der Verknüpfungsbegriffe zu. Wenn diese wie im Patentanspruch 7 möglichst kurz sind und zusätzlich einen Aufbau gemäss dem Patentanspruch 8 aufweisen, können Vergleichsoperationen im Rechner, solche werden bei jedem Suchvorgang durchgeführt, sehr kurz gehalten werden. Gegenüber bekannten Datenbanken benötigt ein Suchvorgang wesentlich weniger Zeit. Dies ist vor allem bei der Verwendung von Datenbanken, in der sehr viele Objekte enthalten sind, äusserst wichtig.

Anhand von Figuren wird ein Ausführungsbeispiel einer erfindungsgemässen Datenbank im nachfolgenden beschrieben. Es zeigen

**Fig. 1** den Aufbau einer Datei einer Datenbank, die vor allen für die Anwendung der indexierten Suche geeignet ist;

**Fig. 2** eine erfindungsgemässe Datenbank mit einer ersten und einer zweiten Datei;

**Fig. 3** den baumstrukturförmigen Aufbau der zweiten Datei, wobei jeweils 16 Datensätze zu je einem Block zusammengefasst sind;

**Fig. 4** als erklärendes Ausführungsbeispiel einzelne Datensätze der zweiten Datei mit eingetragenen Daten,

**Fig. 5** als Fortsetzung des Ausführungsbeispiels gemäss der Fig. 4 einen Datensatz der ersten Datei mit eingetragenen, objektbezogenen Daten und einem vereinfachten Verknüpfungsbegriff, und

**Fig. 6** eine prinzipielle Darstellung einer EDV-Anlage mit Angabe von Bildschirmmasken.

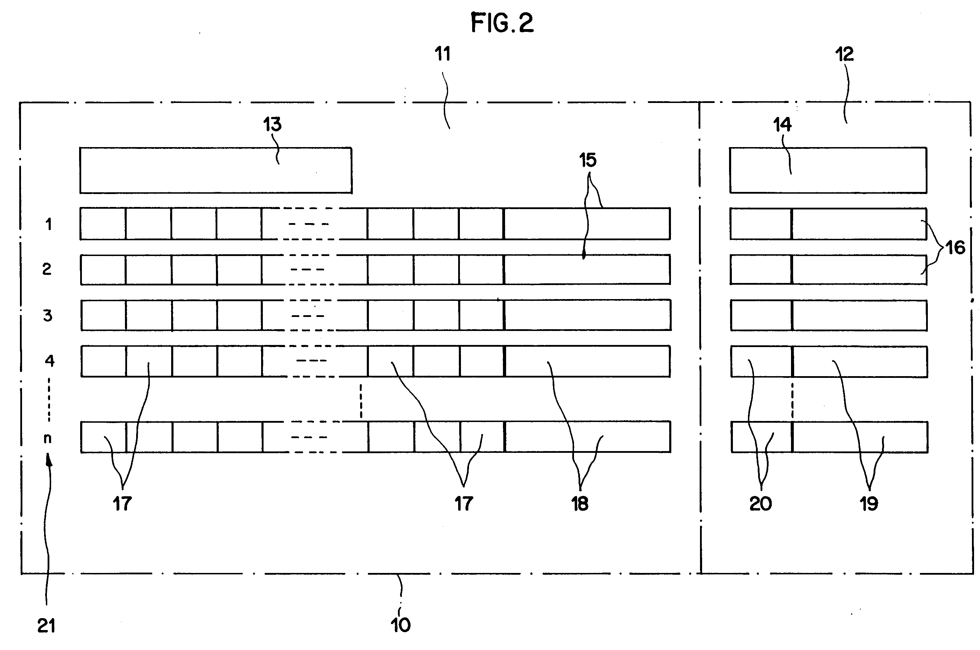

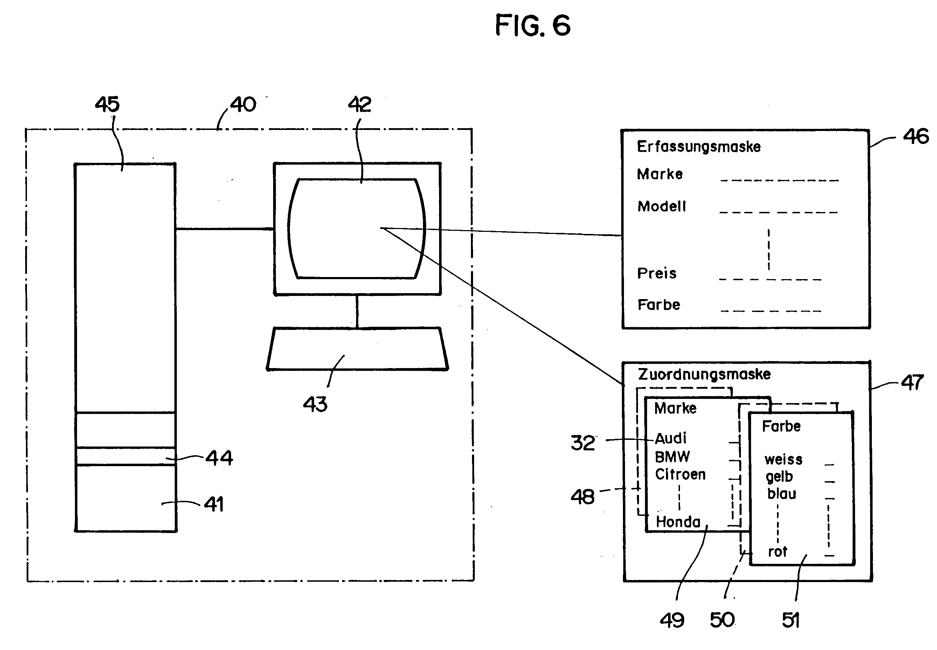

Der prinzipielle Aufbau der erfindungsgemässen Datenbank 10 ist in der Fig. 2 gezeigt. Diese umfasst eine erste Datei 11 und eine zweite Datei 12. In der ersten Datei 11 sind mehrere Datensätze 15 vorhanden, wovon jeder Datensatz in mehrere Datenfelder 17, in welchen objektspezifische Daten gespeichert sind und in je ein Datenfeld 18 unterteilt ist. Pro erfasstes Objekt ist ein Datensatz 15 vorhanden. Die Datensätze 15 der ersten Datei 11 sind in einem Teilbereich 44 (Fig. 6) eines nichtflüchtigen Speichermittels 41 (Fig. 6) einer EDV-Anlage 40 (Fig. 6) im Normalfall einer hinter dem anderen gespeichert, wobei jeder Datensatz eine physische Datensatznummer 21 aufweist. Allen Datensätzen vorangehend ist der sogenannte Dateiheader 13 angeordnet. Dieser umfasst alle die Datei betreffenden Informationen, die bereits in der Beschreibungseinleitung genannt worden sind.

Die zweite Datei 12 ist im Prinzip genau gleich aufgebaut wie die erste Datei 11. Sie umfasst einen Dateiheader 14, dem mehrere Datensätze 16 folgen. Jeder davon ist in mindestens zwei Datenfelder 19, 20 unterteilt. Im einen Datenfeld 19 sind Klassifizierungs- oder Suchbegriffe gespeichert und im anderen Datenfeld 20 ist eine Zuordnungkennzeichnung vorhanden.

Im Datenfeld 18 der ersten Datei 11 ist je ein Verknüpfungsbegriff gespeichert, welcher Informationen enthält, für welche Klassifizierungs- oder Suchbegriffe, die im Datenfeld 19 der zweiten Datei gespeichert sind, die objektbezogenen Daten, die in den Datenfeldern 17 eines Datensatzes der ersten Datei gespeichert sind, zutreffen. Eine Relation zwischen der ersten und der zweiten Datei 11, 12 besteht zwischen den Verknüpfungsbegriffen, die in den Datenfeldern 18 der ersten Datenbank gespeichert sind und den Zuordnungskennzeichnungen, die in den Datenfeldern 20 der zweiten Datenbank gespeichert sind. Die Relation wird mittels einem Softwaremodul von Fall zu Fall anhand eines bestimmten Algorhythmus hergestellt.

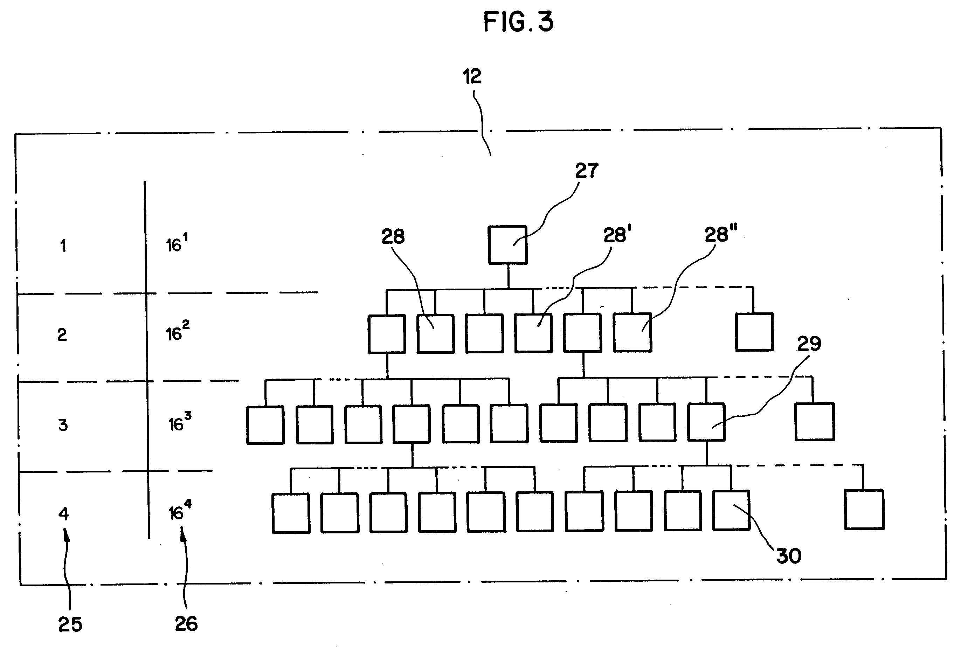

In der Fig. 3 ist gezeigt, dass jeweils mehrere der Datensätze 16 der zweiten Datei 12 zu einem Block 27, 28, 29, 30 zusammengefasst sind. Jeder Datensatz kann dabei nur einem einzigen Block zugeordnet sein. Anhand des in einem bestimmten Datensatz 16 gespeicherten Klassifizierungs- oder Suchbegriffes wird dieser dem einen oder dem anderen der Blöcke 27, 28, 29, 30 zugeordnet. Jeder der Blöcke 27, 28, 29, 30 gehört einer bestimmten Hierarchieebene 25,1; 25,2; 25,3; 25,4 an. Dadurch ist jeder der in einem Datensatz 16 gespeicherten Klassifizierungs- oder Suchbegriffe einer einzigen Hierarchieebene zugeordnet. Die einzelnen Datensätze 16 der zweiten Datei 12 stehen im wesentlichen in einer baumstrukturförmigen Beziehung zueinander. Die Zuordnung der Datensätze 16 zu den einzelnen Blöcken 27, 28, 29, 30 der verschiedenen Hierarchieebenen 25,1; 25,2; 25,3; 25,4 geschieht derart, dass der obersten Hierarchieebene Datensätze mit am weitesten gefassten Klassifizierungs- oder Suchbegriffen enthalten sind. Vorzugsweise werden diese zu einem einzigen Block 27 zusammengefasst. Es können aber auch in der obersten Hierarchieebene bereits mehrere Blöcke mit je mehreren Datensätzen 16 gebildet werden.

Jedem Datensatz der obersten Hierarchieebene können weitere Datensätze einer untergeordneten Hierarchieebene 25,2, die wiederum zu Blöcken 28, 28', 28'' zusammengefasst sind, untergeordnet werden. Die Klassifizierungs- oder

Suchbegriffe in diesen untergeordneten Datensätzen sind gegenüber dem übergeordneten Klassifizierungs- oder Suchbegriff feiner bzw. enger gefasst. Den Datensätzen der zweiten Hierarchieebene 25,2 können wiederum zu Blöcken 29 zusammengefasste Datensätze der dritten Hierarchieebene 25,3 und diesen in der gleichen Art zu Blöcken 30 zusammengefasste Datensätze der vierten Hierarchieebene 25,4 untergeordnet sein.

Eine bevorzugte Struktur der zweiten Datei, die in der Fig. 3 gezeigt ist, weist Blockgrössen mit je sechzehn Datensätzen auf. In dieser Datei lassen sich, wie dies mit dem Bezugszeichen 26 gezeigt ist, $16^4$ verschiedene Klassifizierungs- oder Suchbegriffe speichern. Diese Anzahl dürfte auch für die grössten Datenbankanwendungen ausreichen.

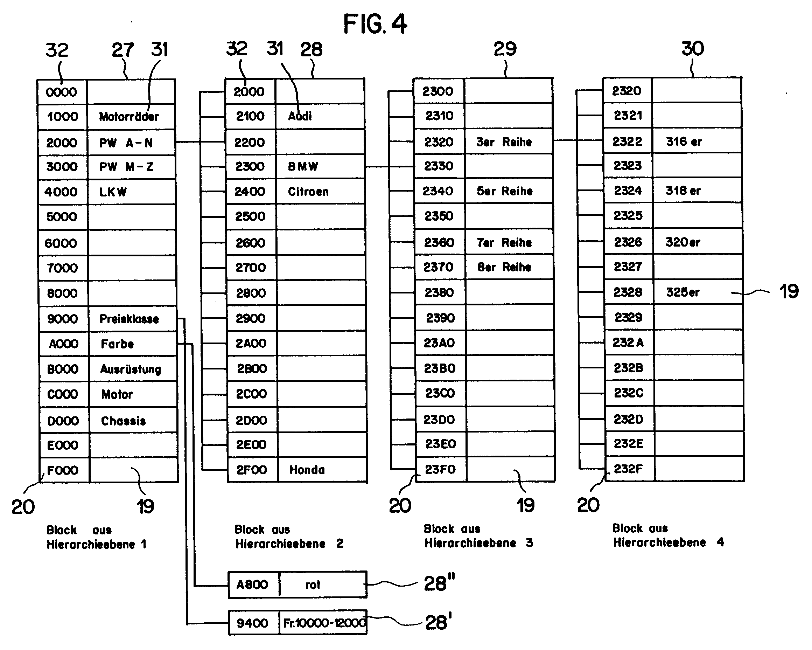

Anhand eines praktischen Beispieles, auf das bereits in der Beschreibungseinleitung hingewiesen worden ist und das den Gebrauchthandel von Fahrzeugen betrifft, soll gemäss der Fig. 4 der Aufbau der zweiten Datei der erfindungsgemässen Datenbank verdeutlicht werden. Im Block 27 der obersten Hierarchieebene sind in den Feldern 19 der einzelnen Datensätze weit gefasste Klassifizierungs- oder Suchbegriffe 31 gespeichert. Diese umfassen im gezeigten Beispiel Fahrzeugkategorie, Preisklasse, Farbe, Ausrüstung, Motor und Chassis. Diese Aufteilung ist nicht abschliessend, sondern nur als Beispiel gedacht. Die in jedem Datensatz dieses Blockes im Datenfeld 20 gespeicherte Zuordnungskennzeichnung umfasst einen Ausdruck mit vier Stellen. Die erste Stelle ist von 0 bis F hexodezimal codiert. Sie kennzeichnet den entsprechenden Datensatz des Blockes 27. Die vier Stellen geben an, dass die Datei in vier Hierarchieebenen aufgeteilt ist. Die Nullen an der zweiten, dritten und vierten Stelle zeigen an, dass es sich um eine Zuordnungskennzeichnung der obersten Hierarchieebene handelt.

In unserem Beispiel seien die Begriffe PW A - N, Preisklasse und Farbe ausgewählt worden. Den Klassifizierungs- oder Suchbegriff PW A - N mit der Zuordnungskennzeichnung 2000 seien die im Block 28 zusammengefassten Datensätze der zweiten Hierarchieebene untergeordnet. Die Klassifizierungs- oder Suchbegriffe enthalten Automarken von A - N. Die erste Stelle der Zuordnungskennzeichnung weist auf den Datensatz des Blockes 27, dem die Datensätze des Blockes 28 untergeordnet sind. Die zweite Stelle der Zuordnungskennzeichnung ist hexadezimal mit 0 - F codiert. Genau gleich sind Blöcke 28', 28'' der zweiten Hierarchieebene den Datensätzen mit der Zuordnungskennzeichnung 9000 und A000 der ersten Hierarchieebene untergeordnet. Der Uebersicht halber ist aus diesen Blöcken 28', 28'' nur noch ein einziger Datensatz gezeichnet. Im einen 28' ist eine Preisklasse von Fr. 10000.-- bis Fr. 12000.-- und im anderen 28'' die Farbe rot enthalten.

Wenn in unserem Beispiel die Marke BMW ausgewählt wird, deren Datensatz die Zuordnungskennzeichnung 2300 aufweist, kann aus Datensätzen, die in einer Gruppe 29 der dritten Hierarchieebene enthalten sind, die gewünschte Modellreihe von BMW ausgewählt werden. In unserem Beispiel haben wir den Datensatz, in dem der Klassifizierungs- oder Suchbegriff Dreierreihe mit der Zuordnungskennzeichnung 2320 gespeichert ist, ausgewählt. Diesem Datensatz untergeordnet sind weitere Datensätze der vierten Hierarchieebene, die zum Block 30 zusammengefasst sind. Darin können wir zwischen den Modellen 316er, 318er, 320er und 325er auswählen. Wählen wir beispielsweise den Datensatz mit dem 320er und der Zuordnungskennzeichnung 2326.

Was wir bis jetzt gemacht haben ist nichts anderes als die Spezifizierung, dass wir in der Datenbank ein Objekt ablegen oder Objekte mit den folgenden Merkmalen suchen: einen PW der Marke BMW der Dreierreihe, Modell 320, Farbe rot, Preisklasse Fr. 10000.-- bis Fr. 12000.--. Mit den drei Zuordnungskennzeichnungen 2326, 9400 und A800 ist die vorgenannte Klassifizierungs- oder Suchbegriffsreihe abschliessend spezifiziert.

An dieser Stelle muss noch erwähnt werden, dass der erste Datensatz in jeder Gruppe 27, 28, 29, 30, dessen Stelle den Hexcode 0 hat, mit keinem Suchbegriff versehen ist, um Zweideutigkeiten auszuschliessen (siehe beispielsweise dritter Datensatz der Gruppe 27 und erster Datensatz der Gruppe 28).

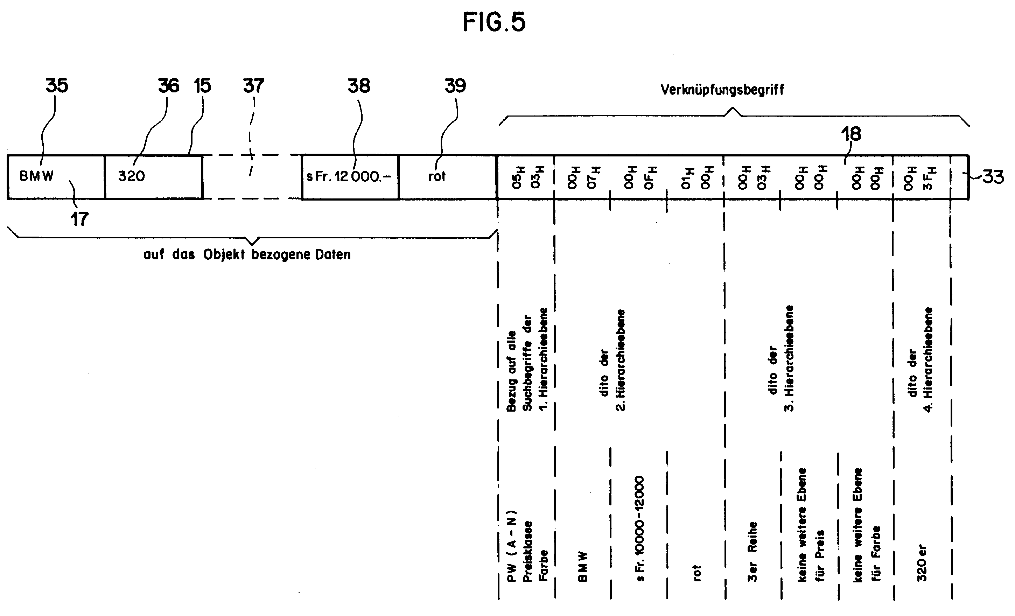

Wechseln wir nun zu der ersten Datei 11 der erfindungsgemässen Datenbank. In der Fig. 5 ist, bezogen auf das angefangene Beispiel, ein Datensatz gezeigt, in welchem in den Datenfeldern 17 auf das Objekt bezogene Daten gespeichert sind. Im gezeigten Beispiel ist in einem ersten Datenfeld die Marke 35, in einem zweiten Datenfeld das Modell 36, in weiteren Datenfeldern weitere objektspezifische Daten 37, beispielsweise Motornummer, Chassisnummer, Ausrüstungsgegenstände, etc., in einem n-ten Datenfeld der Verkaufspreis 38 und in einem (n + 1)ten Datenfeld die Farbe 39 enthalten. Der Eintrag im entsprechenden Datensatz entspricht einem PW der Marke BMW, Modell 320, Verkaufspreis Fr. 12000.--, Farbe rot. Also ein Objekt, das in unserer vorgängig aufgestellten Klassifizierungs- oder Suchbegriffsreihe enthalten ist.

Im Datenfeld 18 ist der diesem Objekt zugeordnete Verknüpfungsbegriff gespeichert. Er enthält Informationen über alle Klassifizierungs- oder Suchbegriffe, die auf das im entsprechenden Datensatz abgelegte Objekt zutreffen. Zur schnellen Klassifizierung von neu erfassten Objekten oder zum schnellen Suchen von Objekten in der Datei, anhand einer beliebigen Suchbegriffskombination, die vom Anwender auf einfache Art einzugeben ist, ist es wichtig, dass der Verknüpfungsbegriff in einem einzigen Datenfeld vorhanden und möglichst kurz ist.

Wie der Verknüpfungsbegriff 33 aufgebaut ist und welche Relation zu den Zuordnungskennzeichnungen 32 besteht, soll nun anhand der Fig. 5 und der Tabelle 1 erklärt werden.

In der ersten Zeile der Tabelle 1 sind die den Datensätzen 16 eines Blockes 27, 28, 29, 30 entsprechenden Stellen in hexadezimaler Codierung aneinandergereiht. Jeder einzelnen Stelle ist ein Dezimaläquivalent aus der Reihe $2^0$ bis $2^{15}$ zugeordnet. Das Dezimaläquivalent ist in der zweiten Zeile der Tabelle 1 und die Reihe $2^0$ bis $2^{15}$ in der dritten Zeile dieser Tabelle 1 sichtbar. Wenn gemäss dem begonnenen Beispiel in der obersten Hierarchieebene der dritte, zehnte und elfte Datensatz gewählt worden sind, entsprechend den Zuordnungskennzeichnungen 2000, 9000 und A000, so ist diese Auswahl durch die Summe der Dezimaläquivalente, d.h. durch die Zahl 1540 spezifiziert. Die abschliessende Auswahl aus jedem der einzelnen Blöcke 27, 28, 29, 30 kann mit zwei 8-Bit-Datenwörtern erfolgen. Würden alle Datensätze innerhalb eines Sechzehnerblockes ausgewählt, so wäre die Grösse des Dezimaläquivalentes 65'535. Um

**Tabelle 1**

| | 0_H | 1_H | 2_H | 3_H | 4_H | 5_H | 6_H | 7_H | 8_H | 9_H | A_H | B_H | C_H | D_H | E_H | F_H | |
|---|---|---|---|---|---|---|---|---|---|---|---|---|---|---|---|---|---|
| 2) | 1 | 2 | 4 | 8 | 16 | 32 | 64 | 128 | 256 | 512 | 1024 | 2048 | 4096 | 8192 | 16384 | 32768 | |
| 3) | $2^0$ | $2^1$ | $2^2$ | $2^3$ | $2^4$ | $2^5$ | $2^6$ | $2^7$ | $2^8$ | $2^9$ | $2^{10}$ | $2^{11}$ | $2^{12}$ | $2^{13}$ | $2^{14}$ | $2^{15}$ | |
| 4) Hierarchieebene 1 | 0 | 0 | 1 "PW (A-N)" | 0 | 0 | 0 | 0 | 0 | 0 | 1 "Preisklasse" | 1 "Farbe" | 0 | 0 | 0 | 0 | 0 | 1540 |
| 5) Ausdruck f. Verknüpfungsbegriff 05_H 03_H | | | | | | | | | | | | | | | | | |
| 6) Hierarchieebene 2 | 0 | 0 | 0 | 1 "BMW" | 0 | 0 | 0 | 0 | 0 | 0 | 0 | 0 | 0 | 0 | 0 | 0 | 8 |
| 7) Ausdruck f. Verknüpfungsbegriff 00_H 07_H | | | | | | | | | | | | | | | | | |
| 8) Hierarchieebene 2 | 0 | 0 | 0 | 0 | 1 "Fr. 10000.-- - 12000.--" | 0 | 0 | 0 | 0 | 0 | 0 | 0 | 0 | 0 | 0 | 0 | 16 |
| 9) Ausdruck f. Verknüpfungsbegriff 00_H 0F_H | | | | | | | | | | | | | | | | | |
| 10) Hierarchieebene 2 | 0 | 0 | 0 | 0 | 0 | 0 | 0 | 0 | 0 | 1 "rot" | 0 | 0 | 0 | 0 | 0 | 0 | 512 |
| 11) Ausdruck f. Verknüpfungsbegriff 01_H 00_H | | | | | | | | | | | | | | | | | |
| 12) Hierarchieebene 3 | 0 | 0 | 1 "3-er" | 0 | 0 | 0 | 0 | 0 | 0 | 0 | 0 | 0 | 0 | 0 | 0 | 0 | 4 |
| 13) Ausdruck f. Verknüpfungsbegriff 00_H 03_H | | | | | | | | | | | | | | | | | |
| 14) Hierarchieebene 3 | 0 | 0 | 0 | 0 | 0 | 0 | 0 | 0 | 0 | 0 | 0 | 0 | 0 | 0 | 0 | 0 | 0 |
| 15) Ausdruck f. Verknüpfungsbegriff 00_H 00_H | | | | | | | | | | | | | | | | | |
| 16) Hierarchieebene 3 | 0 | 0 | 0 | 0 | 0 | 0 | 0 | 0 | 0 | 0 | 0 | 0 | 0 | 0 | 0 | 0 | |
| 17) Ausdruck f. Verknüpfungsbegriff 00_H 00_H | | | | | | | | | | | | | | | | | |
| 18) Hierarchieebene 4 | 0 | 0 | 0 | 0 | 0 | 0 | 1 "320-er" | 0 | 0 | 0 | 0 | 0 | 0 | 0 | 0 | 0 | 64 |
| 19) Ausdruck f. Verknüpfungsbegriff 00_H 3F_H | | | | | | | | | | | | | | | | | |

diese Grösse möglichst kurz darzustellen, kann man sich des ASCII-Codes bedienen, der für jedes 8-Bit-Datenwort ein Zeichen kennt (Zahlensystem der Basis 256). Die Zahl 1540, welche dem Dezimaläquivalent der Klassifizierungs- oder Suchbegriffe aus der ersten Hierarchieebene entspricht, ergibt im System zur Basis 256 das sechste und das vierte Zeichen des ASCII-Codes. In hexadezimaler Codierung entspricht dies 05_H und 03_H. Diesen zweistelligen Ausdruck findet man ganz links im Verknüpfungsbegriff. Er beinhaltet die Fahrzeugkategorie PW A - N, die Preisklasse und die Farbe. Jede mögliche Kombination einer Auswahl aus den sechzehn Datensätzen des Blockes 27 der ersten Hierarchieebene sind also mit einem zweistelligen Ausdruck des ASCII-Codes darstellbar. Es ist bekannt, dass physisch im Rechner selbst jede Stelle des Ausdruckes einem 8-Bit-Datenwort entspricht.

Als nächster Schritt werden die zweistelligen Ausdrücke des Verknüpfungsbegriffes für die Klassifizierungs- oder Suchbegriffe der zweiten Hierarchieebene gebildet. Dies ist in der Tabelle 1 in den Zeilen 6 - 11 gezeigt. Analog zum vorgängig Beschriebenen wird in den Zeilen 6 und 7 der zweistellige Ausdruck für die Marke "BMW", in den Zeilen 8 und 9 der zweistellige Ausdruck für die Preisklasse "Fr. 10000.-- bis 12000.--" und in den Zeilen 10 und 11 der zweistellige Ausdruck für die Farbe "rot" gebildet. In den Zeilen 12 bis 17 werden in gleicher Weise die Blöcke 29 der dritten Hierarchieebene abgearbeitet. Die Zeilen 12 und 13 geben den zweistelligen Ausdruck für die "3er-Reihe", die Zeilen 14 und 15 sowie 16 und 17 besagen durch den zweistelligen Ausdruck "$00_H$, $00_H$" dass sowohl für die Preisklasse als auch für die Farbe keine nähere Präzisierung mehr vorhanden ist, dass also diese Suchzweige mit der Hierarchieebene 2 abschliessend behandelt worden sind. Für die vierte Hierarchieebene, wo lediglich noch die Spezifizierung des Typs "320" notwendig ist, ist der zweistellige Ausdruck für den Verknüpfungsbegriff in den Zeilen 18 und 19 der Tabelle 1 abgeleitet.

Auf diese Weise wird ein Verknüpfungsbegriff 33 beim Erfassen eines Objektes in der Datenbank erstellt. Natürlich geschieht dies mit einem Softwareprogramm, das dem in der Tabelle 1 skizzierten Algorhythmus folgt.

Die Auswahl der Sechzehnerblöcke in der zweiten Datei 12 und des Systems zur Basis 256 sind hier, obschon bevorzugt, nur beispielhaft. Jede andere Blockgrösse und jedes andere Zahlensystem wären ebenfalls möglich. Es muss lediglich darauf geachtet werden, dass sowohl die Zuordnungskennzeichnungen 32 als auch die Verknüpfungsbegriffe 33 möglichst kurz sind. Der Verknüpfungsbegriff 33 ist in der Fig. 5 von links- nach rechts entsprechend den Hierarchieebenen 25,1; 25,2; 25,3; 25,4 geordnet im Datenfeld 18 gespeichert.

Das Erfassen eines neuen Objektes in der erfindungsgemässen Datenbank sowie das Suchen von Datensätzen mit objektbezogenen Daten, die auf irgendeine Kombination von Suchbegriffen zutreffen, soll anhand der Fig. 6 erklärt werden. Darin ist mit 40 eine EDV-Anlage grob skizziert. 41 soll ein nichtflüssiges Speichermittel, beispielsweise eine Festplatte darstellen. Mit 42 ist ein Ausgabemittel, üblicherweise ein Bildschirm und mit 43 ein Eingabemittel, üblicherweise eine Tastatur, dargestellt. In einem Teilbereich 44 des Speichermittels 41 ist die erfindungsgemässe Datenbank gespeichert. Ein Rechenmittel 45 vervollständigt die hier absichtlich nur ganz grob skizzierte EDV-Anlage.

Zum Erfassen eines Objektes erscheint auf dem Bildschirm zuerst eine Erfassungsmaske 46. Darin werden die objektbezogenen Daten, in unserem bereits bekannten Beispiel die Marke, das Modell, der Preis, die Farbe und weitere, hier nicht weiter dargestellte Daten für das zu erfassende Objekt eingegeben. Es erscheint nun eine Zuordnungsmaske 47, in welcher vorzugsweise die Klassifizierungs- oder Suchbegriffe der zweiten Datei, die blockweise geordnet sind, auch blockweise angezeigt werden. Dies geschieht vorzugsweise mittels der bekannten Fenstertechnik. In einem ersten Fenster 48, das nur gestrichelt gezeichnet ist, seien die Klassifizierungs- oder Suchbegriffe der obersten Hierarchieebene ausgewählt worden, beispielsweise also PW A - N, die Preiskategorie und die Farbe. Es erscheint dann ein zweites Fenster 49 mit den Marken, ein nicht gezeichnetes drittes Fenster mit der Modellreihe und ein ebenfalls nicht gezeichnetes viertes Fenster mit dem Typ. In einem fünften Fenster 50 wird dann die Preisklasse ausgewählt und in einem sechsten Fenster 51 die Farbe. Natürlich ist es kaum möglich, bei umfangreichen Klassifizierungs- oder Suchvorgängen sämtliche Fenster auf einmal offenzuhalten. Es kann aber beispielsweise ein Suchzweig nach dem anderen abschliessend behandelt werden. Wir erinnern uns dabei auf den vorzugsweise baumstrukturförmigen Aufbau der zweiten Datei 12.

Die gewünschten Klassifizierungs- oder Suchbegriffe werden mit dem Cursor markiert. Die Zuordnungskennzeichnungen von jedem abgeschlossenen Klassifizierungszweig werden im Rechenmittel 45 festgehalten. Die Klassifizierung erfolgt vorteilhafterweise im Top-Down-Verfahren, d.h., vom weitest gefassten Klassifizierungs- oder Suchbegriff bis zum eng gefassten.

Mit einem Softwaremodul einer Verknüpfungssoftware wird im wesentlichen gemäss dem vorgängig beschriebenen Algorhythmus (Tabelle 1) der Verknüpfungsbegriff gebildet. Die bis dahin im Rechenmittel gespeicherten objektspezifischen Daten und der erzeugte Verknüpfungsbegriff werden nun in einem neuen Datensatz 15 der ersten Datei 11 gespeichert.

Das Suchen von Datensätzen, in denen Objekte enthalten sind, die auf eine bestimmte Auswahl von Suchbegriffen zutreffen, geschieht in analoger Weise. Auf dem Ausgabemittel 42 erscheint die Zuordnungsmaske 47. Wie soeben beschrieben, werden gemäss den im Top-Down-Verfahren in den einzelnen Fenstern markierten Klassifizierungs- oder Suchbegriffe, die Zuordnungskennzeichnungen im Rechenmittel gespeichert. Mittels einem weiteren Softwaremodul, einer Verknüpfungsausdruck-Erzeugungs-Software, wird nun anhand des bereits skizzierten Algorhythmus (Tabelle 1) ein Verknüpfungsausdruck gebildet, welcher Angaben über sämtliche ausgewählten Klassifizierungs- oder Suchbegriffe enthalten sind. Der Verknüpfungsausdruck wird dann mit dem Verknüpfungsbegriff in jedem Datensatz 15 der ersten Datei 11 verglichen und zwar lediglich solange, wie gemäss der Fig. 5 im Feld 18 von links nach rechts der Verknüpfungsbegriff im Verknüpfungsausdruck enthalten ist. Da der Vergleich byteweise auf Ja/Nein-Aussage erfolgt, ist dieser Vorgang äusserst schnell. Für jeden Verknüpfungsbegriff, der im Verknüpfungsausdruck voll enthalten ist, wird der entsprechende Datensatz in eine Temporärdatei kopiert. Nach der Beendigung des Suchvorganges befinden sich Datensätze mit allen gesuchten objektspezifischen Daten in der Temporärdatei und können mit irgendeinem anderen geeigneten Anwendungsprogramm weiterverarbeitet werden.

In einem weiteren Beispiel sei angenommen, dass in der Datenbank nach Personenwagen irgendeiner Marke in der Preisklasse von Fr. 10000.-- bis Fr. 12000.-- gesucht werden soll. Anhand der markierten Datensätze im Block 27 (Fig. 4) wird von der Verknüpfungsausdrucker-

**Tabelle 2**

| | $H_F$ | $H_E$ | $H_D$ | $H_C$ | $H_B$ | $H_A$ | $H_9$ | $H_8$ | $H_7$ | $H_6$ | $H_5$ | $H_4$ | $H_3$ | $H_2$ | $H_1$ | $H_0$ |
|---|---|---|---|---|---|---|---|---|---|---|---|---|---|---|---|---|
| 1) | $H_F$ | $H_E$ | $H_D$ | $H_C$ | $H_B$ | $H_A$ | $H_9$ | $H_8$ | $H_7$ | $H_6$ | $H_5$ | $H_4$ | $H_3$ | $H_2$ | $H_1$ | $H_0$ |
| 2) | 32768 | 16384 | 8192 | 4096 | 2048 | 1024 | 512 | 256 | 128 | 64 | 32 | 16 | 8 | 4 | 2 | 1 |
| 3) | $2^{15}$ | $2^{14}$ | $2^{13}$ | $2^{12}$ | $2^{11}$ | $2^{10}$ | $2^9$ | $2^8$ | $2^7$ | $2^6$ | $2^5$ | $2^4$ | $2^3$ | $2^2$ | $2^1$ | $2^0$ |
| 4) Verknüpfungsausdruck | 0 | 0 | 0 | 0 | 0 | 0 | 1 | 0 | 0 | 0 | 0 | 0 | 1 | 1 | 0 | 0 |
| 5) Teil von Verknüpfungsbegriff | | | | | | $05_H$ | | | | | | | | $03_H$ | | |
| 6) | 0 | 0 | 0 | 0 | 0 | 1 | 1 | 0 | 0 | 0 | 0 | 0 | 0 | 1 | 0 | 0 |
| 7) UND-Verknüpfung, Zeilen 4, 6 | 0 | 0 | 0 | 0 | 0 | 0 | 1 | 0 | 0 | 0 | 0 | 0 | 0 | 1 | 0 | 0 |

zeugungs-Software der in der Tabelle 2 in der Zeile 4 gezeigte Verknüpfungsausdruck gebildet. Dieser wird nun mit den Verknüpfungsbegriffen der einzelnen Datensätze 15 der ersten Datei 11, beginnend mit der obersten Hierarchieebene, verglichen. In der Zeile 5 der Tabelle 2 sind die ersten zwei Stellen des Verknüpfungsbegriffes des in der Fig. 5 dargestellten Datensatzes in hexadezimaler Form enthalten. Die binäre Form davon ist in der Zeile 6 der Tabelle 2 aufgeführt. Es ist klar, dass der in der Fig. 5 dargestellte Datensatz auf das im weiteren Beispiel ausgewählte Suchkriterium ansprechen muss. Im Rechenmittel geschieht eine solche Ueberprüfung dadurch, dass die ersten zwei Stellen des Verknüpfungsbegriffes mit den ersten zwei Stellen des Verknüpfungsausdruckes UND-verknüpft werden. Ist das Resultat dieser UND-Verknüpfung ungleich 00$_H$, wie in der Zeile 7 der Tabelle 2 aufgeführt, dann ist die Information des Verknüpfungsbegriffes im Verknüpfungsausdruck enthalten. In analoger Weise werden die Vergleiche mit den anderen Hierarchieebenen durchgeführt. Im vorliegenden Beispiel enthält der Verknüpfungsausdruck keine weiteren Informationen. Also ist der Datensatz gemäss der Fig. 5 ein gesuchter Datensatz, der objektbezogene Daten enthält, auf die die ausgewählten Suchbegriffe zutreffen. Der Datensatz wird in die Temporärdatei kopiert. Ein Vergleich des Verknüpfungsausdruckes mit dem Verknüpfungsbegriff eines nächsten Datensatzes der ersten Datei wird solange ausgeführt, wie nächste Datensätze vorhanden sind.

Natürlich ist es möglich, obschon im behandelten Beispiel der Einfachheit halber weggelassen, z.B. mehrere Automarken, mehrere Wagenfarben und mehrere Preisklassen gleichzeitig auszuwählen.

Obschon auch mit der erfindungsgemässen Datenbank zusätzlich Indexdateien erstellt werden könnten, würde dies beim Suchen kaum einen wesentlichen Geschwindigkeitsvorteil bringen. Dieser resultiert vor allem darauf, dass die Verknüpfungsbegriffe kurz sind und dass sich die Vergleichsoperationen auf relativ wenige Ja/Nein-Aussagen beschränken, die vom Rechner mit grosser Geschwindigkeit ausgeführt werden können.

Es ist klar, dass, bevor mit der Datenbank gearbeitet werden kann, ein Grundstamm an Klassifizierungs- oder Suchbegriffen aufbereitet werden muss. Weitere Klassifizierungs- oder Suchbegriffe können jederzeit zugefügt werden. Bei einer vorgegebenen Anzahl von Hierarchieebenen hat dies auf die Stellenzahl der Zuordnungskennzeichnungen keinen Einfluss. Indem das Datenfeld für den Verknüpfungsbegriff gross genug definiert wird, kann auch dieser Begriff dynamisch den Erfordernissen der Datenbank angepasst werden.

**Patentansprüche**

1. Datenbank in einer EDV-Anlage (40) mit mindestens je einem Eingabemittel (43), einem Ausgabemittel (42) sowie einem nichtflüchtigen Speichermittel (41), wobei die Datenbank (10) mindestens eine erste Datei (11) mit mehreren Datensätzen (15) umfasst, die je in mehrere Datenfelder (17, 18) unterteilt sind und wobei in jedem Datensatz auf ein in der Datenbank erfasstes Objekt bezogene Merkmale gespeichert sind und wobei die erste Datei in einem Teilbereich (44) des Speichermittels gespeichert ist, gekennzeichnet durch:
   - die Datenbank (10) umfasst eine zweite Datei (12) mit mehreren Datensätzen (16), wobei jeder der Datensätze in mindestens zwei Datenfelder (19, 20) unterteilt ist,
   - in einem ersten (19) der Datenfelder (19, 20) der zweiten Datei (12) ist je ein Klassifizierungs- oder Suchbegriff (31) gespeichert,
   - in einem zweiten (20) der Datenfelder (19, 20) der zweiten Datei ist eine Zuordnungskennzeichnung (32) gespeichert,
   - die Klassifizierungs- und Suchbegriffe (31) sind hierarchisch geordnet, wobei mindestens eine Hierarchieebene (25) gebildet ist und wobei jeder der Klassifizierungs- und Suchbegriffe mindestens einer Hierarchieebene zugeordnet ist,
   - die Zuordnungskennzeichnung (32) enthält eine Angabe über mindestens eine Hierachieebene (25) des Klassifizierungs- oder Suchbegriffes sowie zusätzliche Angaben über eventuell übergeordnete Hierarchieebenen, und
   - in einem (18) der Datenfelder (17, 18) jedes Datensatzes (15) der ersten Datei (11) ist ein Verknüpfungsbegriff (33) vorhanden, derart, dass daraus die Zuordnungskennzeichnungen (32) aller auf das entsprechende Objekt zutreffenden Klassifizierungs- oder Suchbegriffe (31) ableitbar sind.

2. Datenbank nach Anspruch 1, dadurch gekennzeichnet, dass die Zuordnungskennzeichnung (32) ein mehrstelliger, alphanumerischer Ausdruck ist, wobei für jede der Hierarchieebenen (25) der zweiten Datenbank (12) im Ausdruck eine einzige Stelle vorhanden ist.

3. Datenbank nach Anspruch 1 oder 2, dadurch gekennzeichnet, dass der obersten Hierarchieebene (25,1) und allen weiteren Hierarchieebenen (25,2; 25,3; 25,4) je mehrere Datensätze (16), die zu Blöcken (27, 28, 29, 30) zusammengefasst sind, zugeordnet sind, wobei die Datensätze eine im wesentlichen baumstrukturförmig aufgebaute Beziehung zueinander haben.

**4.** Datenbank nach Anspruch 3, dadurch gekennzeichnet, dass jeder einer bestimmten Hierarchieebene (25) zugeordnete Datensatz (16) nur einem einzigen, in einer übergeordneten Hierarchieebene enthaltenen Datensatz zugeordnet ist.

**5.** Datenbank nach Anspruch 3 oder 4, dadurch gekennzeichnet, dass die oberste Hierarchieebene (25,1) sechzehn Datensätze (16) umfasst, die zu einem ersten (27) der Blöcke (27, 28, 29, 30) zusammengefasst sind und dass die erste Stelle des alphanumerischen Ausdruckes der Zuordnungskennzeichnung (32) hexadezimal codiert ist.

**6.** Datenbank nach Anspruch 5, dadurch gekennzeichnet, dass jedem der der obersten Hierarchieebene (25,1) zugeordneten Datensätze (16) je sechzehn weitere, zu den weiteren Blöcken (28, 28', 28'') zusammengefasste Datensätze (16) in einer ersten untergeordneten Hierarchieebene (25,2) zugeordnet sind und dass die je sechzehn weiteren Datensätze (16) in der zweiten Stelle des alphanumerischen Ausdruckes der Zuordnungskennzeichnung (32) hexadezimal codiert sind.

**7.** Datenbank nach einem der Ansprüche 3 bis 6, dadurch gekennzeichnet, dass jeder Verknüpfungsbegriff (33) so aufgebaut ist, dass alle Datensätze (16) eines Blockes (27, 28, 29, 30) mit höchstens einem zweistelligen Ausdruck darstellbar sind.

**8.** Datenbank nach einem der Ansprüche 3 bis 7, dadurch gekennzeichnet, dass jeder Verknüpfungsbegriff (33) so aufgebaut ist, dass darin in der Reihenfolge der Hierarchieebenen (25,1; 25,2; 25,3; 25,4) von oben nach unten die Klassifizierungs- oder Suchbegriffe (32) vollständig enthalten sind, die dem Objekt zugeordnet worden sind.

**9.** Verfahren zum Erfassen von Objekten in einer Datenbank nach Patentanspruch 1, gekennzeichnet durch die folgenden Verfahrensschritte:
- Ausgabe einer Erfassungsmaske (46) auf dem Ausgabemittel (42) zum Eingeben der auf das zu erfassende Objekt zutreffenden Merkmale mittels dem Eingabemittel (43),
- Ausgabe einer Zuordnungsmaske (47) auf dem Ausgabemittel (42) mit den Klassifizierungs- oder Suchbegriffen (32) der zweiten Datei (12), wobei mindestens ein Teil dieser Begriffe pro Hierarchieebene (25,1; 25,2; 25,3; 25,4) in je einem Fenster (48, 49) auf dem Ausgabemittel (42) zusammngefasst dargestellt werden,
- Öffnen der einzelnen Fenster (48, 49) im Top-Down-Verfahren und Markieren der Klassifizierungs- oder Suchbegriffe (32), die dem zu erfassenden Objekt zuzuordnen sind,
- Erzeugen des Verknüpfungsbegriffes (33) mit einer Verknüpfungs-Software,
- Speichern der auf das Objekt bezogenen Merkmale und des Verknüpfungsbegriffes (33) in einem weiteren Datensatz (15) der ersten Datei (11), und
- Erfassen weiterer Objekte gemäss den genannten Verfahrensschritten.

**10.** Verfahren zum Auffinden von Objekten in einer Datenbank nach Patentanspruch 1, gekennzeichnet durch die folgenden Verfahrensschritte:
- Ausgabe einer Zuordnungsmaske (47) auf dem Ausgabemittel (42) mit den Klassifizierungs- oder Suchbegriffen (32) der zweiten Datei (12), wobei mindestens ein Teil dieser Begriffe pro Hierarchieebene (25,1; 25,2; 25,3; 25,4) in einem Fenster (48, 49) auf dem Ausgabemittel (42) zusammengefasst dargestellt werden,
- Oeffnen der einzelnen Fenster (48, 49) im Top-Down-Verfahren und Markieren der Klassifizierungs- oder Suchbegriffe (32), die auf das bzw. auf die zu suchenden Objekte zutreffen soll bzw. sollen,
- Erzeugen eines Verknüpfungsausdruckes aus den markierten Klassifizierungs- oder Suchbegriffen mit einer Verknüpfungsausdruck-Erzeugungssoftware,
- Vergleichen des Verknüpfungsausdruckes mit den Verknüpfungsbegriffen (33) in jedem Datensatz (15) der ersten Datei (11) im Top-Down-Verfahren, wobei der Vergleich im wesentlichen stellenweise erfolgt und lediglich so lange fortgesetzt wird, wie Uebereinstimmung zwischen dem Verknüpfungsausdruck und dem Verknüpfungsbegriff (33) herrscht,
- Kopieren der im verglichenen Datensatz (15) der ersten Datei (16) enthaltenen objektbezogenen Merkmale in eine Temporärdatei, wenn der Verknüpfungsbegriff dieses Datensatzes voll im Verknüpfungsausdruck enthalten ist, und

- Weiterverarbeiten der gesuchten, in der Temporärdatei gespeicherten objektbezogenen Merkmale.

# FIG. 1

EP 0 572 749 A1

# FIG.2

EP 0 572 749 A1

# FIG.3

EP 0 572 749 A1

# FIG. 4

| 32 | 27 31 |
|---|---|
| 0000 |  |
| 1000 | Motorräder |
| 2000 | PW A-N |
| 3000 | PW M-Z |
| 4000 | LKW |
| 5000 |  |
| 6000 |  |
| 7000 |  |
| 8000 |  |
| 9000 | Preisklasse |
| A000 | Farbe |
| B000 | Ausrüstung |
| C000 | Motor |
| D000 | Chassis |
| E000 |  |
| F000 |  |

Block aus Hierarchieebene 1

| 32 | 31 28 |
|---|---|
| 2000 |  |
| 2100 | Audi |
| 2200 |  |
| 2300 | BMW |
| 2400 | Citroen |
| 2500 |  |
| 2600 |  |
| 2700 |  |
| 2800 |  |
| 2900 |  |
| 2A00 |  |
| 2B00 |  |
| 2C00 |  |
| 2D00 |  |
| 2E00 |  |
| 2F00 | Honda |

Block aus Hierarchieebene 2

| 29 | |
|---|---|
| 2300 |  |
| 2310 |  |
| 2320 | 3er Reihe |
| 2330 |  |
| 2340 | 5er Reihe |
| 2350 |  |
| 2360 | 7er Reihe |
| 2370 | 8er Reihe |
| 2380 |  |
| 2390 |  |
| 23A0 |  |
| 23B0 |  |
| 23C0 |  |
| 23D0 |  |
| 23E0 |  |
| 23F0 |  |

Block aus Hierarchieebene 3

| 30 | |
|---|---|
| 2320 |  |
| 2321 |  |
| 2322 | 316 er |
| 2323 |  |
| 2324 | 318 er |
| 2325 |  |
| 2326 | 320er |
| 2327 |  |
| 2328 | 325er |
| 2329 |  |
| 232A |  |
| 232B |  |
| 232C |  |
| 232D |  |
| 232E |  |
| 232F |  |

Block aus Hierarchieebene 4

| A800 | rot | 28" |
|---|---|---|

| 9400 | Fr.10000-12000 | 28' |
|---|---|---|

EP 0 572 749 A1

18

## FIG.5

Verknüpfungsbegriff

auf das Objekt bezogene Daten

| | |
|---|---|
| 33 | |
| $3F_H$ $00_H$ | dito der 4. Hierarchieebene — 320 er |
| $00_H$ $00_H$ | keine weitere Ebene für Farbe |
| $00_H$ $00_H$ | keine weitere Ebene für Preis |
| $03_H$ $00_H$ | dito der 3. Hierarchieebene — 3er Reihe |
| $00_H$ $01_H$ | rot |
| $0F_H$ $00_H$ | s Fr. 10000–12000 |
| $07_H$ $00_H$ | dito der 2. Hierarchieebene — BMW |
| $03_H$ $05_H$ | Bezug auf alle Suchbegriffe der 1. Hierarchieebene — PW ( A – N ) Preisklasse Farbe |

18

39 — rot

38 — s Fr. 12 000.–

37

36 15 — 320

35 — BMW

17

# FIG. 6

EP 0 572 749 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 774 886 (SIEMENS A.G.) 23. Dezember 1971 * Seite 1, Zeile 25 - Seite 4, Zeile 5 * --- | 1 | G06F15/401 G06F15/413 G06F15/411 |
| A | DE-A-3 118 180 (THE AGENCY OF INDUSTRIAL SCIENCE AND TECHNOLOGY, JAPAN) 25. Februar 1982 * Zusammenfassung * --- | 1 | |
| A | DE-A-3 311 663 (TOKYO SHIBAURA DENKI K.K.) 13. Oktober 1983 * Zusammenfassung * --- | 1 | |
| A | EP-A-0 130 050 (TOSHIBA K.K.) 2. Januar 1985 * Zusammenfassung * ----- | 1 | |

RECHERCHIERTE SACHGEBIETE (Int. Cl.5)

G06F

Der vorliegende Recherchenbericht wurde für alle Patentansprüche erstellt

| Recherchenort | Abschlußdatum der Recherche | Prüfer |
|---|---|---|
| DEN HAAG | 22 JANUAR 1993 | KATERBAU R.E. |